# EUROPEAN PATENT SPECIFICATION

(11) **EP 2 327 525 B1**
(45) Date of publication and mention of the grant of the patent: **14.05.2014**
(21) Application number: 09400055.1
(22) Date of filing: 27.11.2009
(51) Int. Cl.: B29C 33/38, B29C 70/44, B29C 33/52

(54) **Mold core for fabricating a part out of composite material**
Formkern zur Herstellung eines Teils aus Verbundstoffmaterial
Noyau de moule pour fabriquer une pièce en matériau composite

(43) Date of publication of application: 01.06.2011
(73) Proprietor: AIRBUS HELICOPTERS DEUTSCHLAND GmbH, 86609 Donauwörth (DE)
(72) Inventor: Kunze, Steffen, 83620 Vagen (DE); Kretschmer, Tom, 01936 Königsbrück (DE)
(74) Representative: Pouillot, Laurent Pierre Paul

(56) References cited:
- WO-A1-2005/105402
- WO-A1-2008/003715
- WO-A1-2008/003721
- FR-A1- 2 745 745

## Description

The present invention relates to the general technical field for fabricating parts out of composite material, e.g. comprising fiber-based reinforcement that is impregnated with resin. By way of example, such composite parts are obtained by molding a reinforced composite material around a mold core. The composite material may also include preimpregnated layers referred to as "Prepreg" that solidify while the fabrication method is taking place. In such methods, temperature, pressure and time are the parameters for driving the curing the composite parts.

The present invention relates more particularly to fabricating such a mold core for use in molding the reinforced part.

The often-complex inside shapes of molded parts can make it very difficult, or even impossible, to extract mold cores without running the risk of damaging the part.

In order to handle problems of this kind, it is known during molding operations to make use of cores that are soluble in water or in some other liquid. To obtain sufficient solubility as well as low density, the materials constituting such mold cores are generally open-celled compounds, of the Aquacore™ kind. Examples of such compounds are disclosed for instance in document US 6,828,373 or in document EP 1 695 805.

Making mold cores in that way requires them to be sealed with a material that is suitable for ensuring that material for constituting the future molded part, such as a molten metal or a resin, does not infiltrate into said core. Any infiltration would give rise to the inside shape of the part that is obtained by molding presenting defects that could lead to said part being rejected.

The sealing material also serves to ensure that the material constituting the parts or portions of said parts obtained by molding are not contaminated with a material that constitutes the mold core.

By way of example, known sealing materials are constituted by plastic foils, solid plastics, adhesive tapes and adhesive foils, lacquer or powder coatings.

By way of example, document DE 10 2005 011 930 describes fabricating soluble mold cores that are provided with sealing means referred to as a "vacuum film". The cores described present sealing means that are impervious to gases and to liquids. The sealing means are applied intimately over the entire outside surface of the core so as to fit as closely as possible to the shape of said core.

The major drawback with mold cores of that kind is that they suffer from deformation associated with the material constituting said cores expanding under the effect of heat, and more particularly the effect of expanding the gas, e.g. air that is contained within said cores. In general, such expansion causes the sealing means to swell.

Swelling can then alter the shape of the part for molding, e.g. during a molding operation in the context of a method of infusing a resin under a vacuum, also known as the vacuum infusion (V.I.) method.

Such swelling can also compress the fiber or fabric layers that are to be impregnated with resin, e.g. during a molding operation in the context of a resin transfer molding (R.T.M.) operation, utilizing a two-sided closed mold. Localized compression of the fibers or fabrics inside the mold leads to the part being non-uniformly impregnated with resin. This gives rise to a part that presents a weak zone and consequently that does not comply with specifications.

Systems that enable the pressure inside the core to be reduced during molding operations have been devised, e.g. by means of connections or drains that pass through vacuum covers or enclosures, together with appropriate control means. Those systems are complex, very difficult to install, and consequently expensive.

The document DE 10342867 A1 discloses a process for producing a water soluble molding core from a water soluble material by filling the material into a mould tool which has the shape of the core to be formed, and then hardening the material in the mould. Hardening takes place inside a semi-permeable membrane, which surrounds the water soluble material, seals it, and defines the outer contour after it has hardened. A fibre material and matrix material resin is applied to the core and the membrane, and the resin is then hardened. After the core is removed from the mould, the semi-permeable membrane remains in the fibre composite.; A filling opening is located in the membrane.

The object of the present invention is consequently to provide a novel mold core that does not present the above-mentioned drawbacks and that is particularly simple and inexpensive to fabricate.

Another object of the present invention is to provide a novel mold core that can be used in different molding methods.

The objects given to the invention are achieved with the help of a mold core for making a reinforced hollow part based on a composite material including fibers, fabrics, or textiles and an impregnation resin, said core comprising a solid filler material shaped to the inside shape of said hollow part and at least one sealing means applied to the entire outside surface of the filler material which would otherwise get into contact with the resin, the sealing means being a confinement layer, that is firstly permeable relative to substances in gaseous form contained in the filler material, and secondly impermeable relative to the liquid impregnation resin that spreads around the confinement layer and that comes into contact with said confinement layer.

In an embodiment of a mold core in accordance with the invention, the confinement layer includes, at least locally, at least one semi-permeable membrane. Such a membrane is chosen for instance from a product of the GORE TEX™ product group.

In an embodiment of a mold core in accordance with the invention, the confinement layer is a semi-permeable membrane.

In an embodiment of a mold core in accordance with the invention, the confinement layer includes calibrated perforations, at least locally.

By way of example, the confinement layer is made of at least a plastic foil or at least a solid plastic (e.g. made of Polyamid (PA), Thermoplastic Polyurethane (TPU), Polymethylpentene (PMP)), or at least an adhesive tape or adhesive foil or at least a lacquer or powder coating.

By way of example, the perforations present dimensions lying in the ranges that are smaller than 200 µm.

Preferably but not necessary, the perforations are distributed uniformly over the entire confinement layer.

In an embodiment of a mold core in accordance with the invention, the confinement layer is constituted by a semi-permeable varnish.

In an embodiment of a mold core in accordance with the invention, the confinement layer is constituted by a varnish that is impermeable to liquids, at least to the liquid impregnation resin and to gases (e.g. Aquaseal, Aquaskin, Aquazol), and in which calibrated perforations are made.

Under such circumstances, the perforations present dimensions lying in the ranges that are smaller than 200 µm .

The perforations made in such a varnish are preferably distributed uniformly over the entire layer of varnish.

In an embodiment of a mold core in accordance with the invention, the filler material or compound is decomposable by any physical or chemical principles. The meaning of "decomposable" encompasses for instance soluble in a liquid (e.g. in water) or soluble by other chemical, physical effects or said combination (e.g. ultrasonic excitation in water).

An advantage of the mold core in accordance with the invention lies in its ability to conserve an exact shape and consequently to guarantee stable dimensions for the molded part. The dry semi-finished or resin-impregnated materials, e.g. in the form of a fiber-based laminar assembly, then reproduce accurately the shape of the mold core.

Another advantage of the mold core in accordance with the invention lies in the fact that it can be used effectively in a variety of molding methods. The mold core in accordance with the invention may be used for example to implement a resin transfer molding method or a vacuum infusion method, thereby enabling said methods to be simplified by virtue of its particular properties.

Another advantage of the mold core in accordance with the invention lies in the fact that the appearance of undesired pores in the reinforcing layer surrounding said mold core is avoided. With this being true even though the gas is exhausted through the sealing means of the core. This remarkable and unexpected phenomenon is associated with implementing known molding methods, e.g. V.I. or R.T.M., during which a first rise in temperature up to the resin-infusion temperature enables a large part of the gas contained in the core to be removed. The flow of resin around the mold core, in contact with the sealing means, then serves to diminish the pores within said sealing means and consequently to reduce the amount of gas that escapes and that would otherwise generate unwanted pores in the reinforcing layer. The mold core of the invention thus makes it possible to reconcile properties that have until now been considered as contradictory, namely exhausting gas from the core through the reinforcing layer, and avoiding the appearance of unwanted pores in said layer. The mold core of the invention thus makes it possible to obtain permeability that varies while the molding method is taking place while conserving a structure that is simple and reliable.

Another advantage of the mold core in accordance with the invention concerning RTM-processes in closed mold, lies in the fact that the undesired localized compression of the fibers or fabrics inside the mold due to swelling, leading to a part being non-uniformly impregnated with resin, is avoided.

The invention and its advantages appear in greater detail from the following description of an embodiment given by way of illustration with reference to the accompanying figures, in which:
- Figure 1 is a diagram of an embodiment of a mold core in accordance with the invention;
- Figure 2 is a diagram showing a molding method known as the V.I. method and that is implemented using a mold core in accordance with the invention; and
- Figure 3 is a diagram of another molding method, known as the R.T.M. method and that is implemented using a mold core in accordance with the invention.

Elements that are structurally and functionally identical and present in more than one distinct figure or illustration are given the same numerical or alphanumeric references in each of them.

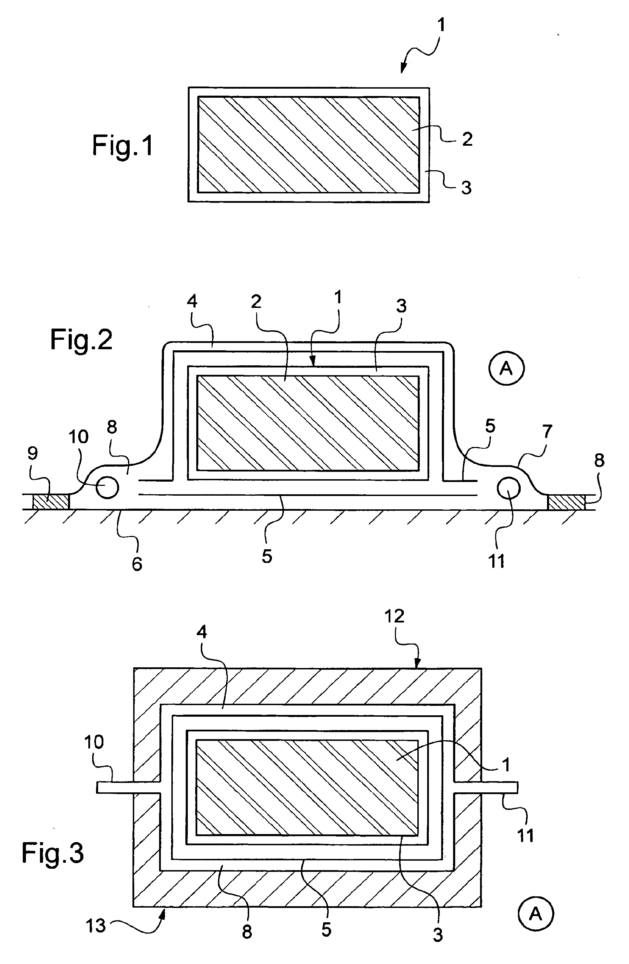

The mold core 1 in accordance with the invention as shown by way of example in Figure 1 comprises solid filler material 2 shaped of the inside shapes of said hollow part that is to be molded, and at least one sealing means 3 that is applied to all of the outside surface of the filler material 2.

The filler material 2 is preferably soluble in a liquid and, by way of an example, it is constituted by a material or compound of the Aquacore™ kind.

The sealing means 3 comprise a confinement layer that is firstly permeable to a gas contained in the filler material 2, and secondly impermeable to a liquid impregnation resin 4, shown in Figures 2 and 3, that spreads around the confinement layer, and that comes into contact with said confinement layer.

By way of example, the confinement layer includes at least locally, a semi-permeable membrane.

Alternatively, the confinement layer may be constituted entirely by a semi-permeable membrane.

In an embodiment of the core in accordance with the invention, the confinement layer includes calibrated perforations (not shown), at least locally.

The confinement layer is made for example from a plastic foil, a solid plastic or an adhesive tape or adhesive foil, a lacquer- or powder coating which incorporates the perforations or a combination of the said materials. Alternatively a solid perforated plate (e.g. made of metal) can be incorporated locally in the said confinement layers (e.g. by bonding).

Advantageously, the perforations present dimensions lying in the ranges smaller than 200 µm and they are distributed for example uniformly over all the surface of the confinement layer.

In another embodiment of the core in accordance with the invention, the confinement layer is constituted by a semi-permeable varnish.

Alternatively, the confinement layer may be constituted by a varnish that is impermeable relative to liquids and gases, and in which calibrated perforations have been made.

The perforations of the varnish then present dimensions lying in the ranges smaller than 200 µm and they are distributed for example uniformly over the entire layer of varnish.

By way of example, the perforations are made in the confinement layer by needling with a needle roller or needle stamp on a not perforated confinement layer prior or after its application on the core.

Figure 2 is a diagram of a molding method, known as the vacuum infusion or V.I. method, that is implemented using a mold core 1 in accordance with the invention.

In the V.I. method, the mold core 1 provided with its reinforcing layer, e.g. a semi-finished fiber-based material 5, is placed on a support plate 6.

A vacuum sheet 7 covers the assembly to define a molding cavity 8. A sealing strip 9 serves to isolate the inside space of the molding cavity from the outside environment A.

The molding cavity 8 is provided with an orifice 10 for feeding resin 4 and a suction orifice 11 for applying a controlled vacuum to the inside of said molding cavity 8. The vacuum established inside the molding cavity 8 serves to cause the resin 4 to flow therein and impregnate the semi-finished material 5, once the assembly has been raised to the impregnation temperature, e.g. in a range from 60°C to 150°C. The expanding air or gas contained in the filler material can then pass through the sealing means 3 and the semi-finished material 5 by virtue of the suction generated via the suction orifice 11.

Thereafter, the assembly is raised to at the solidification or hardening temperature for the semi-finished material 5 as impregnated with the resin 4. Contact between the resin 4 and the sealing means 3 serves to reduce the permeability of said sealing means 3 and consequently to prevent the residual air or gas contained in the filler material 2 from escaping. It is not desirable for such escape to take place during the solidification stage since that would lead to unwanted pores appearing in the molded part.

The quantity of residual air or gas contained in the filler material, on expanding, does not lead to significant deformation of the sealing means 3, as long as the effectual pressure within the filler material or compound due to the temperature increase, does not rise above ambient pressure present in the manufacturing environment (atmosphere pressure).

Another way of contributing to reducing the permeability of the sealing means 3 may consist in a controlled increase of the pressure at the suction orifice 11 during the solidification stage. This amounts to reducing the suction. The pressure at the suction orifice 11 may for example be increased so as to reach the internal pressure of the mold core 1 during the solidification stage.

Figure 3 is a diagram of another molding method, known as the resin transfer molding (R.T.M.), which is implemented by using a mold core 1 in accordance with the invention.

In the R.T.M. method, the mold core 1 provided with its reinforcing layer, e.g. the fiber-based semi-finished material 5, is placed in a molding cavity 8 defined by two mold portions 12 and 13 that are closed together in leaktight manner. The two mold portions 12 and 13 are preferably massive in order to withstand high molding pressures, e.g. pressures of the order of 10 bar absolute. The molding cavity 8 also includes feed and suction orifices 10 and 11 such as ducts or other connections.

When the temperature rises from 23°C to 80°C, for example, in order to reach the injection temperature, the feed orifice 10 (also known as "gate") is closed and the suction orifice 11 is either open and in communication with the outside environment A, or else in fluid flow communication with a suction source.

The air or gas expanding in the filler material 2 can then escape, at least in part, by passing through the sealing means 3.

Thereafter, the temperature of the assembly is raised to the solidification or hardening temperature for the semi-finished material 5 impregnated with the resin 4. Contact between the resin 4 and the sealing means 3 in the mold serves to reduce the permeability of said sealing means 3 and consequently to prevent the residual air or gas that is contained in the filler material 2 from escaping. The quantity of residual air or gas contained in the filler material, on expanding, does not lead to significant or detectable deformation of the mold core 1 or of the sealing means 3.

Due to an effectual resin injection pressure and/or evacuating the cavity during heating to injection temperature, the residual air or gas contained in the filler material does not escape through the sealing meaning and it does not cause undesired porosity in the reinforced resin material.

Another way of contributing to reducing the permeability of the sealing means 3 is obtained by closing the suction orifice 11 and increasing, in controlled manner, the pressure at the feed orifice 10, during the solidification stage. This amounts to establishing a positive pressure in the molding cavity 8. By way of example, the pressure at the feed orifice 10 may be increased to reach a minimum pressure of about 1,5 bar absolute during injection and solidification if the cavity was not evacuated prior resin injection in the mold.

Naturally, the present invention is capable of being subjected to numerous variations as to its implementation. Although several embodiments and implementations are described, it will readily be understood that it is not conceivable to identify exhaustively all possible embodiments or implementations falling into the scope of the appended claims.

## Claims

1. A mold core (1) for making a reinforced hollow part based on a composite material including fibers, fabrics, or textiles and an impregnation resin, said core (1) comprising a solid filler material or compound (2) shaped to the inside shape of said hollow part and at least one sealing means (3) applied to the entire outside surface of the filler material (2) which otherwise would get into contact to the resin, the sealing means (3) being a confinement layer that is firstly permeable relative to substances in gaseous form contained in the filler material (2), and secondly impermeable relative to the liquid impregnation resin (4) that spreads around the confinement layer and that comes into contact with said confinement layer **characterized in that** the confinement layer includes calibrated perforations, at least locally.

2. A mold core (1) according to claim 1,
**characterized in that** the confinement layer includes, at least locally, at least one semi-permeable membrane.

3. A mold core (1) according to claim 1,
**characterized in that** the confinement layer is a semi-permeable membrane.

4. A mold core (1) according to claim 1,
**characterized in that** the confinement layer is for example made of at least one plastic foil or at least a solid plastic or at least one adhesive tape or adhesive foil or at least a lacquer- or powder coating, or a combination of the said materials.

5. A mold core (1) according to claim 1 or claim 4,
**characterized in that** the perforations present dimensions lying in the ranges smaller than 200 µm.

6. A mold core (1) according to any one of claims 1, 4 or 5,
**characterized in that** the perforations are distributed uniformly over the entire confinement layer.

7. A mold core (1) according to claim 1,
**characterized in that** the confinement layer is constituted by a semi-permeable varnish.

8. A mold core (1) according to any one of claims 1 to 7,
**characterized in that** the filler material (2) or compound is decomposable by any physical or chemical principles.

## Patentansprüche

1. Formkern (1) zur Herstellung eines verstärkten hohlen Teils auf der Grundlage eines Verbundmaterials, welches Fasern, Gewebe oder Stoffe und ein Imprägnierungsharz umfasst, wobei der Formkern (1) ein festes Füllmaterial oder einen Füllkörper (2) aufweist, der so geformt ist, dass er die Innenform des hohlen Teils aufweist und mindestens ein Dichtmittel (3) aufweist, das auf der gesamten Außenfläche des Füllmaterials (2) angebracht ist, welches sonst in Kontakt mit dem Harz treten würde, wobei das Dichtmittel (3) eine Sperrschicht ist, die erstens bezüglich gasförmiger Substanzen, die in dem Füllmaterial (2) enthalten sind, durchlässig ist, und zweitens undurchlässig bezüglich des flüssigen Imprägnierungsharzes (4), das um die Sperrschicht herum verteilt ist und mit der Sperrschicht in Kontakt kommt,
**dadurch gekennzeichnet, dass** die Sperrschicht zumindest stellenweise kalibrierte Perforierungen aufweist.

2. Formkern (1) nach Anspruch 1,
**dadurch gekennzeichnet, dass** die Sperrschicht mindestens stellenweise eine halbdurchlässige Membran aufweist.

3. Formkern (1) nach Anspruch 1,
**dadurch gekennzeichnet, dass** die Sperrschicht eine halbdurchlässige Membran ist.

4. Formkern (1) nach Anspruch 1,
**dadurch gekennzeichnet, dass** die Sperrschicht zum Beispiel hergestellt ist aus mindestens einer Plastikfolie oder mindestens einem festen Plastikteil oder mindestens einem Klebeband oder einer Klebefolie oder mindestens einer Lack- oder Pulverbeschichtung oder einer Kombination dieser Materialien.

5. Forxnkern (1) nach Anspruch 1 oder 4,
**dadurch gekennzeichnet, dass** die Perforierungen Abmessungen aufweisen, die in Bereichen von kleiner als 200 µm liegen.

6. Formkern (1) nach einem der Ansprüche 1, 4 oder 5,
**dadurch gekennzeichnet, dass** die Perforierungen gleichmäßig über die gesamte Sperrschicht verteilt angeordnet sind.

7. Formkern (1) nach Anspruch 1,
**dadurch gekennzeichnet, dass** die Sperrschicht aus einem halbdurchlässigen Lack besteht.

8. Formkern (1) nach einem der Ansprüche 1 bis 7,
**dadurch gekennzeichnet, dass** das Füllmaterial (2) oder der Füllkörper auf physikalischem oder chemischem Wege zersetzbar ist.

## Revendications

1. Noyau de moule (1) pour fabriquer une pièce creuse renforcée basée sur un matériau composite comportant des fibres, des tissus ou des textiles et une résine d'imprégnation, ledit noyau (1) comprenant un matériau de remplissage ou composé solide (2) façonné dans la forme intérieure de ladite pièce creuse et au moins un moyen d'étanchéification (3) appliqué à la totalité de la surface extérieure du matériau de remplissage (2) qui autrement viendrait en contact avec la résine, le moyen d'étanchéification (3) étant une couche de confinement qui est premièrement perméable aux substances sous forme gazeuse contenues dans le matériau de remplissage (2), et deuxièmement imperméable à la résine d'imprégnation liquide (4) qui s'étale autour de la couche de confinement et qui vient en contact avec ladite couche de confinement, **caractérisé en ce que** la couche de confinement comporte des perforations calibrées, au moins localement.

2. Noyau de moule (1) selon la revendication 1,
**caractérisé en ce que** la couche de confinement comporte, au moins localement, au moins une membrane semi-perméable.

3. Noyau de moule (1) selon la revendication 1,
**caractérisé en ce que** la couche de confinement est une membrane semi-perméable.

4. Noyau de moule (1) selon la revendication 1,
**caractérisé en ce que** la couche de confinement est par exemple constituée d'au moins une feuille plastique ou d'au moins un plastique solide ou d'au moins un ruban adhésif ou une feuille adhésive ou d'au moins une laque ou un revêtement en poudre ou d'une combinaison desdits matériaux.

5. Noyau de moule (1) selon la revendication 1 ou la revendication 4,
**caractérisé en ce que** les perforations présentent des dimensions se situant dans les gammes inférieures à 200 µm.

6. Noyau de moule (1) selon l'une quelconque des revendications 1, 4 et 5, **caractérisé en ce que** les perforations sont distribuées uniformément sur la totalité de la couche de confinement.

7. Noyau de moule (1) selon la revendication 1,
**caractérisé en ce que** la couche de confinement est constituée d'un vernis semi-perméable.

8. Noyau de moule (1) selon l'une quelconque des revendications 1 à 7,
**caractérisé en ce que** le matériau de remplissage (2) ou le composé est décomposable par tous principes physiques ou chimiques.
